# EUROPEAN PATENT APPLICATION

(11) **EP 4 729 689 A1**
(43) Date of publication of application: **22.04.2026**
(21) Application number: 24207240.3
(22) Date of filing: 17.10.2024
(51) Int. Cl.: D21G 9/00, G01N 29/032

(54) **CONTROLLING THE TREATMENT OF A FIBER-BASED MATERIAL**

(71) Applicant: Siemens Energy Global GmbH & Co. KG, 81739 München (DE)
(72) Inventor: Schwarz, Hermann, 97084 Würzburg (DE); Michaelis, Gerd, 91096 Möhrendorf (DE); Strama, Olaf, 91077 Dormitz (DE)

(57) **Abstract**

The present method refers to a method to control the treatment of fiber-based materials. Herein, the inventive method provides an improved insight in the utilized fiber-based material treatment device to improve existing treatment processes and enable to implement new treatment relying on such improved insight. Furthermore, the present invention refers to a fiber-based material treatment device for such method. Additionally, the present invention refers to an upgrade kit to adapt an existing fiber-based material treatment device to be able to utilize such method. Additionally, the present invention refers to a computer program product enabling a computing entity to execute such method and improve the insight in a corresponding fiber-based material treatment device.

## Description

The present method refers to a method to control the treatment of fiber-based materials. Furthermore, the present invention refers to a fiber-based material treatment device for such method. Additionally, the present invention refers to an upgrade kit to adapt an existing fiber-based material treatment device to be able to utilize such method. Additionally, the present invention refers to a computer program product enabling a computing entity to execute such method and improve the insight in a corresponding fiber-based material treatment device.

Fiber-based materials represent common materials being utilized since centuries. Herein, corresponding materials like paper changed from a high value item to commodity products being essential elements of modern life. Such development was only possible based on continuous technical improvements to solve new arising problems and demands. For example, utilizing different source materials significantly influences the process. For example, utilizing a continuously adapted treatment to take into account external influences like interconnected renewable energy sources provides a significant risk for unstable processes. Also, the specific materials utilized in the process like paper being pulped to provide fibers for further treatment differ slightly impacting the dissolution process. Analyzing the materials to be processed in details, taking a plurality of samples and analyzing them during treatment or including significant safety margins of the treatment, however, are contrary to the high volume expected to be processed for such business.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of controlling a treatment of fiber-based material,
wherein the method utilizes a control unit adapted to control the treatment of the fiber-based material and a treatment device containing at least one vibration sensor and at least one container,
wherein the vibration sensor receives vibration signals from the container during a treatment process of fiber-based material in the at least one container and generates vibration data,
wherein the vibration data is analyzed by the control unit to determine a current state of the fiber-based material in the at least one container,
wherein the treatment conditions of the fiber-based material in the at least one container are at least partially controlled based on the current state. The term "fiber-based material" as used herein refers to a material containing fiber material like cellulose fibers. It was noted that utilizing such method allows to gain a significantly improved insight in the treatment of fiber-based materials allowing to easily evaluate the current state and predict the subsequent behavior of such treatment. Allowing to surprisingly simply predict the quality of a product manufactured from such treated fiber-based material like some paper. It was noted that the inventive method allows to highly reliably monitor the current state of the treatment. Allowing to not only secure that the respective required state of the fiber-based material treatment is already reached to cut down unnecessary safety margins of the treatment periods. It also allows to secure that, for example, unexpected highly resistant fiber composites are pulped reliably. Or whether interfering substances are available requiring additional processing time, changing the treatment parameters like the temperature, the stirring speed or the like or additional actions like adding additional substances. What specific additional substances might be available from experience solely based on the data acquired herewith or based on an additional chemical analysis being triggered based on the data of a respective deviation acquired using the inventive method. Summarized the inventive method allows to monitor the current state of the treatment in real time and to control the treatment accordingly to secure a high-quality product of the treatment in turn enabling to secure high quality products manufactured from it. Like a paper material providing a specified strength and leaf appearance. The term "to pulp" as used herein has the common meaning the skilled person is aware of. Especially, it characterizes that a fiber-based material is broken apart down into a shapeless mass or slurry containing separated fibers.

Also, it was noted that malfunctions like problems with the stirring, unexpected temperature changes, and the like can be identified based on the unexpected deviation of fiber interactions and therefore changes in vibration spectra of corresponding devices. Herein, the inventive method not only allows to identify such problem but enables to directly control the treatment and adapt it to maintain the desired quality of the treatment.

Preferably, the present invention refers to a method of manufacturing paper, wherein the above specified method is part of the manufacturing process of the paper. A practical example is to utilize the specified method to highly efficiently monitor and control a dissolution step of fiber-based material being pulped into fibers. Such processed fiber-based material can subsequently be utilized to prepare a new paper sheet. In such cases, for example, old paper is utilized. However, based on even slight deviations of the old paper to be utilized the fibers might not completely be pulped based on different binders or a different processing step applied during manufacturing said old paper. For example, such application cases significantly suffer from possible problems of remaining unpulped fibers or the like while the demands are, for example, to shorten the treatment time as possible. The inventive method allows to real time monitor such dissolution step to determine whether everything can proceed as planned, additionally time it required, parameters of the treatment like the temperature need to be controlled, further processing steps are required or even the subsequently steps can be executed earlier as the fibers are already pulped sufficiently. Allowing to highly reliably control such treatment ensuring a high quality of the product.

The basic term in this context is oscillation: it describes the change of a measurand around an equilibrium over time. These are generally referred to as vibrations. Vibrations can be deterministic or stochastic versus time.

Vibrations propagate in a medium as waves. The medium can be, for example, a solid elastic body, a liquid, a gas, or combinations thereof. Depending on the state of aggregation, different wave forms can occur. In solids, these are transverse waves and longitudinal waves. In liquids and gases vibrations propagate as longitudinal waves.

Vibrations in the audible frequency range from about 20 to 20,000 Hz are referred to as sound or noise. In terms of human perception, a distinction is made between sound and noise as desired or undesired emission. In this document such a distinction is not made. Depending on the medium, we generally speak here of structure-borne noise or airborne noise.

A range of industrial-grade sensors are available for the acquisition of noise. Depending on the medium, these are, for example, accelerometers for structure-borne noise, hydrophones for noise in liquids or microphones for air-borne noise.

According to a further aspect the present invention refers to a fiber-based material treatment device being adapted to execute an inventive method,
wherein the fiber-based material treatment device contains at least one vibration sensor, at least one container, and a control unit,
wherein the control unit is adapted to control the treatment of the fiber-based material,
wherein the at least one container is adapted to process the fiber-based material. While the control unit may be realized with some temporary storage only retrieving the required data from an external database on demand it is typically preferred that the control unit contains a data storage containing a computer program to execute the inventive method.

According to a further aspect the present invention refers to a upgrade kit containing at least one vibration sensor and a control unit,
wherein the upgrade kit is adapted to be integrated into a fiber-based material treatment device,
wherein the upgrade kit is adapted to enable the fiber-based material treatment device to execute the inventive method after the kit has been integrated. It was noted that even existing fiber-based material treatment devices can be upgraded very easily by providing a respective upgrade kit. A required wiring of the sensors and the control unit can be included, or a respective wireless communication can be integrated. Also means of communication of the control unit with a local or remote database can be included like adding network ports or a network connection using the mobile network. Enabling to retrieve required data like the parameters of a container or the fiber-based material to be utilized from a local database or a remote database or a combination thereof.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product wherein the device stores the computer program product and/or provides the computer program product for further use.

To simplify understanding of the present invention it is referred to the detailed description hereafter and the figures attached as well as their description. Herein, the figures are to be understood being not limiting the scope of the present invention but disclosing preferred embodiments explaining the invention further.
Fig. 1 shows a schematic scheme of the phases of an exemplarily treatment of fiber-based material.
Fig. 2 shows an exemplarily treatment and data processing.
Fig. 3 shows an exemplarily spectrum of a first vibrational sensor of a two vibrational sensor system.
Fig. 4 shows an exemplarily spectrum of a first vibrational sensor of a two vibrational sensor system.
Fig. 5 shows an exemplarily frequency spectrum of the first vibrational sensor.
Fig. 6 shows an exemplarily frequency spectrum of the first vibrational sensor.

Preferably, the embodiments hereafter contain, unless specified otherwise, at least one processor and/or data storage unit to implement the inventive method.

Unless specified otherwise terms like "calculate", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long-term data storage like hard drives or data storage units like CDs, DVDs, USB sticks and the like. Such data storage can additionally include or be connected to a control unit to allow a processing of the data stored on the data storage.

In the following the invention will be exemplarily refer to pulp manufacturing as example of a fiber-based material manufacturing process. It was noted that the application of the invention in such area was especially beneficial. Corresponding pulp treatment is, for example, typically utilized to manufacture paper or cardboard products. The inventive method can be very beneficially utilized to control critical process steps of such manufacturing and easily adapt such processes to be reliable and stable despite swift changes of the resources utilized and external influenced short term adaptions of the frame conditions requiring corresponding adaptions of the specific treatment parameters.

According to one aspect the present invention refers to a method as described above.

Like stated above it was noted that the inventive method is very suitable to be applied to a pulp related treatment. According to further embodiments it is preferred that the fiber-based material is fiber pulp or paper.

Furthermore, it was noted that it is typically beneficial to place such vibration sensor at a specific location. According to further embodiments it is preferred that the at least one vibration sensor is located at the outer surface or inside a wall of a container of the treatment device, wherein the container of the treatment device is adapted to contain the fiber-based material during a treatment step of the fiber-based material. It was noted that such vibration sensors provide a high lifetime while still providing a very good insight the in the processes inside the treatment device.

Additionally, it was noted that it is also beneficial to place a vibration sensor inside a container being adapted to contain such fiber-based material during treating said material. According to further embodiments it is preferred that the at least one vibration sensor is located within a container of the treatment device, wherein the container of the treatment device is adapted to contain the fiber-based material during a treatment step of the fiber-based material. While such vibration sensors typically provide a very limited lifetime it can be beneficial to include a vibration sensor at such position providing a further improved insight. Surprisingly, even a constantly required replacement of a hydrophone can be beneficial for specific embodiments, for example, in case the corresponding process taking place at this location is very sensitive and needs to be controlled at a level of highest precision.

It was noted that a beneficial possibility to analyze the vibration signals utilizes historic data. According to further embodiments it is preferred that vibration pattern data is retrieved from a database,
wherein the vibration pattern data contains at least one vibration pattern relating to a specific damage of the treatment device,
wherein the vibration signals are analyzed using the vibration pattern data to identify a damage of the treatment device based on a related vibration pattern. It is surprisingly easy utilizing such stored pattern data to associate specific changes of the vibrations to corresponding damages at a very early stage to even schedule a required maintenance action in normal breaks with requiring to shut down such treatment devices based on some damages impairing the treatment. Identifying the specific damage also enables to evaluate the impact on an ongoing treatment and determine whether it can be finalized including potential adaptions of the treatment to secure the quality of the product. Providing a highly beneficial solution to the operator as the respective amounts of material is typically within the range of tons that otherwise need to be treated again with very much effort or discarded being neither environment friendly nor financially acceptable for such businesses.

Herein, the insight in the treatment device is very detailed. According to further embodiments it is preferred that current state contains data with regard to at least one data source of the group consisting of movement of a stirring device in the at least one container, vibrations of moving parts of the treatment device, vibrations of the at least one container, vibrations within the fiber-based material, and inhomogeneities within the fiber-based material. Typically, it is preferred that the current state includes at least two, more preferred at least four, of the aforementioned data sources. It is surprisingly possible to gain insight in such different characteristics based on the collected vibration signals. Herein, even multiple characteristics can be deducted from the vibration, wherein, for example, the vibration signals from multiple vibration sensors are analyzed and compared to each other to provide a multidimensional analysis also based on the difference of changes of vibration signals from different vibration sensors.

While it is possible to deduce the state of the treatment based on the data acquired by a single sensor it is for typical embodiments often preferred to increase the amount of acquired sensor data. According to further embodiments it is preferred that at least two vibration sensors collect vibration signals from a single container. Combining the sensor data of multiple sensors of the same container allows to significantly increase the insight on the current state. Especially, it was noted that analyzing the difference of the sensor signals of such multiple sensors allows to identify deviations and problems with a significantly improved accuracy and reliability going beyond a mere backup system. For example, when reviewing the differences of a vibration sensor located in the upper area of the container and a vibration sensor located in the lower area of the container. Herein, it was noted that the respective signals can be automatically cleaned from the differences originating from such differing positioning utilizing, for example, some sample measurements with a defined treatment. Thereafter an expert can be directly provided, for example, with a delta spectrum showing the deviations allowing to directly spot respective problems to be addressed. Also, it surprisingly easy to train an artificial intelligence to review such information to make respective evaluations and define necessary actions.

For typical application cases it is preferred that the container contains reinforcement structures. Herein, the at least one vibration sensor or at least a part of the at least one vibration sensor like one of two available vibration sensors can be attached to such reinforcement structure. Such reinforcement structures increase the mechanical stability, wherein they can take any shape known to the skilled person like rips or a frame structure being part of the container. Naturally, the at least one vibration sensor can be attached to any part of the container including such reinforcement structure. While vibrations of, for example, a frame structure a container is merely contacting can also provide very interesting data a reinforcement structure being part of the container provides significantly more detailed insight. Such reinforcement structure is non-detachable connected to the container main body. For example, they can be welded to the remaining part of the container or can be directly included in the design of the container during its manufacturing process. For specific applications it can be preferred that at least one of the at least one vibrations sensor is attached to a reinforcement structure of the container.

For typical applications it was noted that the vibration sensors are collecting data within a specified range. According to further embodiments it is preferred that the at least one vibration sensor contains a vibration sensor being adapted to detect vibration signals of a range located between 5Hz and 20 000Hz, preferably located between 500Hz and 8500Hz, more preferred located between 100Hz and 10000Hz. It was noted that corresponding data is typically very suited to monitor and control such treatment.

To gain a very specific insight into certain steps of treatment such fiber-based material it is often preferred to monitor a very narrow bandwidth of the vibrations. According to further embodiments it is preferred that the at least one vibration sensor a vibration sensor being adapted to detect vibration signals of a range located between 3000Hz and 8000Hz, more preferred located between 3500Hz and 7000Hz. Such bandwidth is, for example, very suitable for typical applications to control the progress of the treatment of the fiber-based material like dissolution processes of fiber-based material during the treatment.

To realize the inventive method, it was noted that a remote control unit can be beneficially utilized. According to further embodiments it is preferred that the control unit is a remote control unit, wherein data regarding the vibration signals is transmitted to the remote control unit to be analyzed. Corresponding systems, for example, allow to make best use of centralized expertise. Such remote-control unit is not directly connected to the treatment device including the container but is connected to such treatment device via a network. Such network can be a local network of an industrial facility or a network like the internet.

Method according to any of the aforementioned claims, wherein transients of the vibration signal are detected and analyzed. Reviewing specifically such vibration signal is very efficient as it allows to already acquire much insight of the treatment of such fiber-based material while reducing the effort required. Significantly cutting down the time an expert needs to execute such analysis or the processing power required by an artificial intelligence to analyze the data and provide evaluations.

According to a further aspect the present invention refers to a fiber-based material treatment device being adapted to execute an inventive method,
wherein the fiber-based material treatment device contains at least one vibration sensor, at least one container, and a control unit adapted to influence the treatment of the fiber-based material,
wherein the at least one container is adapted to process the fiber-based material.

Herein, it is preferred for typical applications to provide at least one container of such device with at least two vibration sensors. According to further embodiments it is preferred that the fiber-based material treatment device contains at least two vibration sensor being adapted to collect vibration signals from a single container. For many application cases it is preferred that at least two vibration sensors are located outside the container, inside a container wall or a combination thereof. Naturally, inside the container wall is not to be understood to be inside the container. Inside the container wall is to be understood that the respective vibration sensor is located inside a cavity of the container wall not being in contact with the inside of the container.

To provide reliable stand-alone systems and upgrades of existing devices it is preferred to include such processing device in the treatment device. According to further embodiments it is preferred that the fiber-based material treatment device contains the control unit. Corresponding treatment devices provide a reliable processing while being independent from external units like remotely located control units. This is surprisingly beneficial as no danger arises from a loss of connection to such remote control unit.

According to a further aspect the present invention refers to an upgrade kit containing at least one vibration sensor and at least one control unit, wherein the upgrade kit is adapted to be integrated into a fiber-based material treatment device, wherein the fiber-based material treatment device based on the integration of the upgrade kit is adapted to realize an inventive method.

According to further aspect the present invention refers to a computer program product, tangibly embodied in a machine-readable storage medium, including instructions operable to cause a computing entity to execute an inventive method.

According to further aspect the present invention refers to storage device for providing an inventive computer program product, wherein the device stores the computer program product and/or provides the computer program product for further use.

The following detailed description of the figure uses the figure to discuss illustrative embodiments, which are not to be construed as restrictive, along with the features and further advantages thereof.

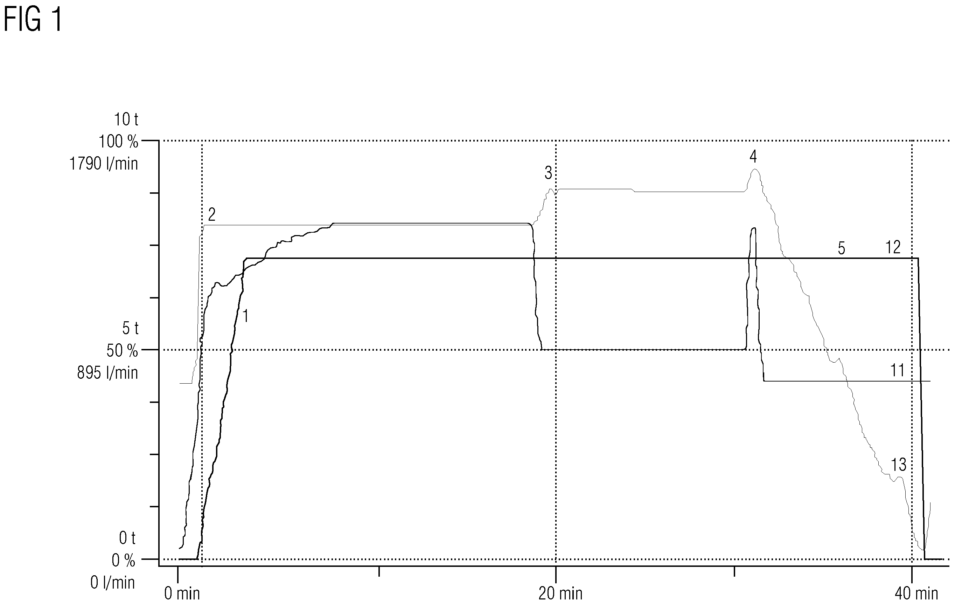

Figure 1 shows a schematic scheme of the phases of an exemplarily treatment of fiber-based material. Herein, the percentage show the maximum load of the fiber mass represented by curve 12 in the container with a total of 10t. Furthermore, it shows the water level inside the container represented by curve 13 with a total of 100%. Additionally, it shows the agitator speed represented by curve 11, wherein the maximum speed is 1790 l/min. Herein, the scheme contains a paper filling step 1 and a water filling step 2 representing filling the container with paper and water. During step 3 additional water is introduced like in step 4. During step 5 the mixture is pumped out. During these process steps the vibration sensors receive vibration signals from the container (34) during a treatment process of fiber-based material being paper pulp containing cellulose fibers in the at least one container. The vibration sensor collects vibration data being analyzed by a control unit utilizing acoustic pattern recognition. Herein, the evaluation of the vibration data allows to deduce the current state of the fiber-based material. The stirring within the container is utilized to homogenize the paper pulp material inside the container, wherein the determined current state contains the homogenization stage of the corresponding material. Based on the determined current state the treatment parameters are adapted accordingly. For example, the process can be sped up by skipping some time included as safety to ensure only a homogenized material is further processed. Or some delay of the homogenization is countered, for example, by longer stirring, adding an additive and/or controlling the temperature in case as delay of the homogenization is identified.

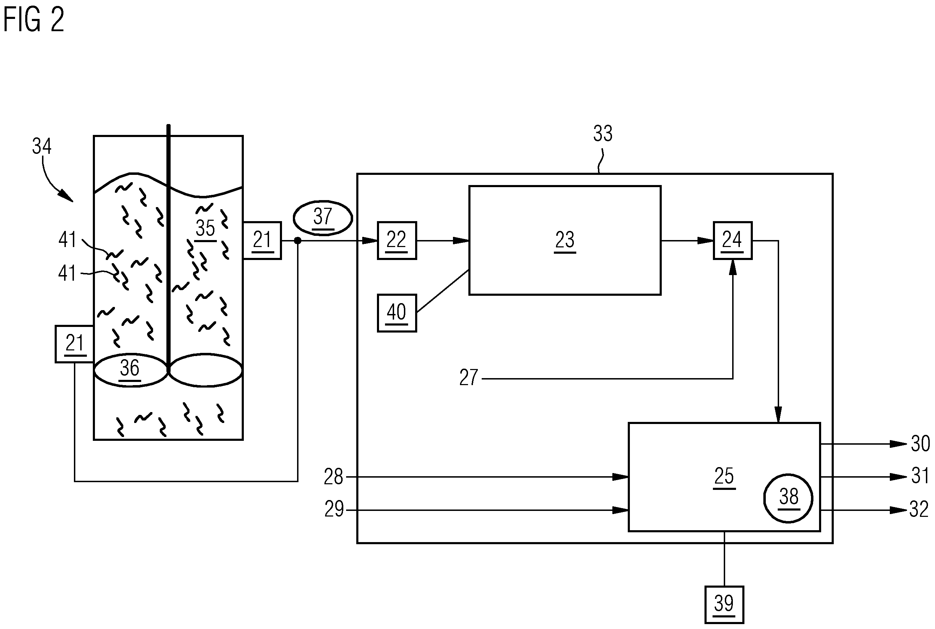

Figure 2 shows a schematic scheme of an exemplarily treatment and data processing utilized to control a treatment of a fiber-based material as shown in figure 1 in real time. Herein, the container 34 contains the fiber-based material 35 being stirred by a stirrer 36 and heated by a heating element not shown in the figure. Figure 2 exemplarily shows some separated fibers 41 being located in the fiber-based material 35. Furthermore, the container 34 contains two vibration sensors 21 being attached to the outer surface of the container 34. Herein, the two vibration sensors 21 detect the vibration signals created by the container 34 and generates vibration data 37 being forwarded to a control unit 33. Said vibration data 37 is processed in a pretreatment step 22 in which the signal undergoes sampling and filtering. Subsequently, the vibration data is subjected to a frequency and amplitude analysis 23. Such frequency and amplitude analysis 23 can be based on artificial intelligence or methods known to the skilled person like pattern recognition.

Subsequently, the processed vibration data is compared against a threshold 27 in threshold analysis 24.

The output from the threshold analysis 24 is utilized by the control logic 25 running on a control device. Herein, the control logic interfaces to the process control via signals like signals 28 to 32 as exemplarily shown in the schematic figure 2. Herein, the logic receives a measure signal 28 or stop signal 29 and generates, for example, a ready signal 30, a running signal 31 and a service signal 32.

It was noted that at least certain states can also be very simply defined by specific patterns and a control logic can be provided that such pattern is achieved or not available anymore an action is initiated or deactivated. For example, unless the vibration spectrum shows that the fiber-based material is pulped in a required way the subsequent step is postponed until the desired state is achieved. Including that in case such state is not achieved within a specified time period a respective notification is forwarded to an operator to, for example, decide, make manual changes to the treatment or take samples for analysis.

However, a control device 33 containing a control logic 25 preferably makes use of a more complex control logic 35 like including an artificial intelligence 38. While the artificial intelligence can be trained with historic data and simulation data the control logic can additionally be connected to a historic data 39 as shown in figure 2. Alternatively or additionally, the control logic 25 can also be connected to a simulation database not shown in the figure 2. Making use of such databases enables to further increase the reliability of the control unit 33 for typical application cases. The control unit 33 utilizes a parameter set 40 representing specific parameters of the container 34 and the fiber-based material 35. Said parameter set 40 can be entered manually or retrieved from a respective database that can be located at the facility or remotely. For example, such parameters relating to the container 34 can be stored on a data storage attached to the container 34 or noted down on the container 34. Such parameter relating to the fiber-based material can be, for example, retrieved from a remote database provided by the provider of the fiber-based material. The parameter set 40 according to the example as shown in figure 2 is stored locally on the control device to be utilized during the data processing like the frequency and amplitude analysis 23.

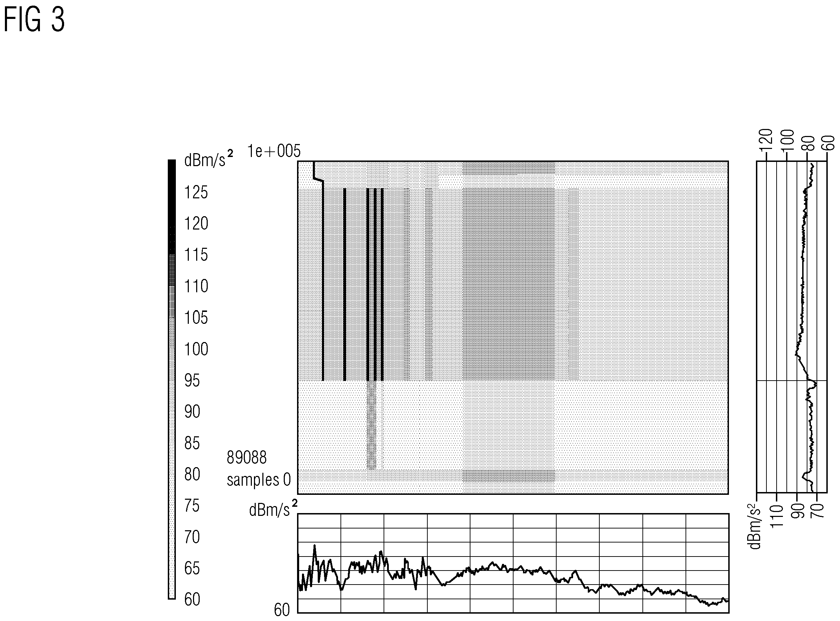

Figure 3 shows an exemplarily spectrum of a first vibrational sensor of a two vibrational sensor system. Herein, the spectrum clearly shows vibrations that can be attributed to the movement of the agitator, fundamental frequencies of the drive, vibrations caused by the mass, resonance frequencies of the tub and transient events due to material inhomogeneity. For example, during step 23 a part of the spectrum vs. time graph is cut out for used for analysis. Herein, the amplitude is monitored in relation to its change over time. As soon as it becomes stable a stable process stage can be deducted.

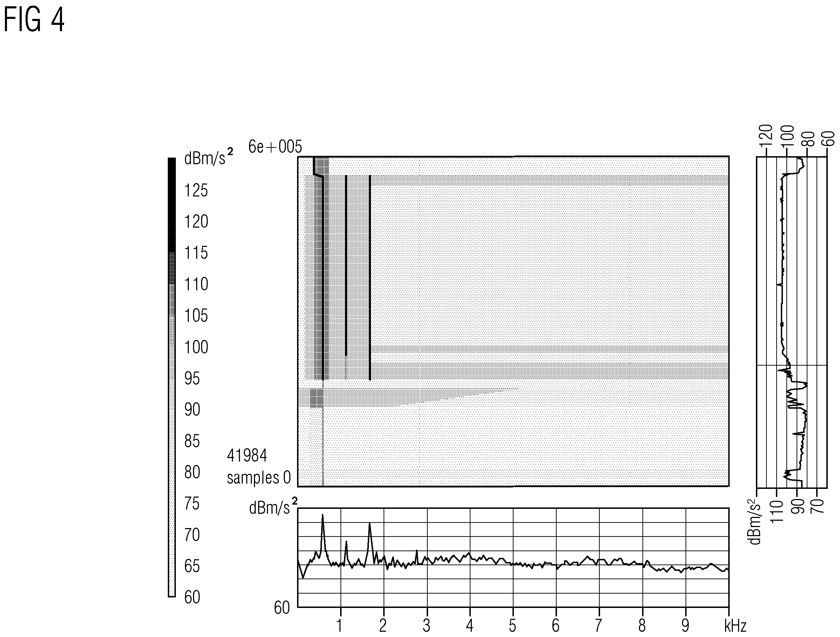

Figure 4 shows an exemplarily spectrum of a first vibrational sensor of a two vibrational sensor system. Herein, the spectrum clearly shows vibrations that can be attributed to movement of the agitator, fundamental frequencies of the drive, vibrations caused by the mass, resonance frequencies of the pulper.

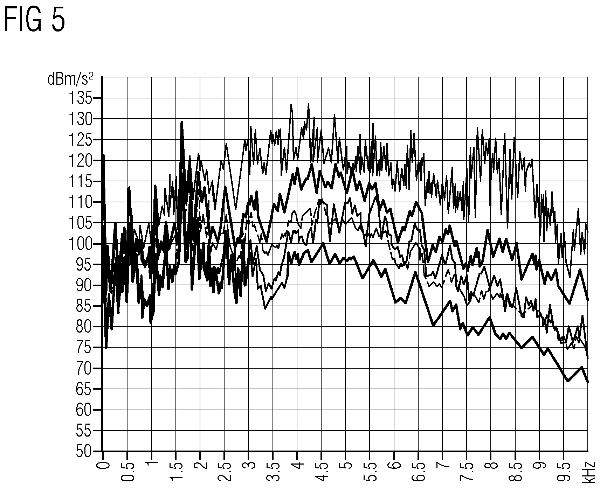

Figure 5 shows an exemplarily frequency spectrum of the first vibrational sensor. Herein, the harmonic units up to approximately 2.5 kHz are stably identifiable as well as transient events recognizable as increased noise level.

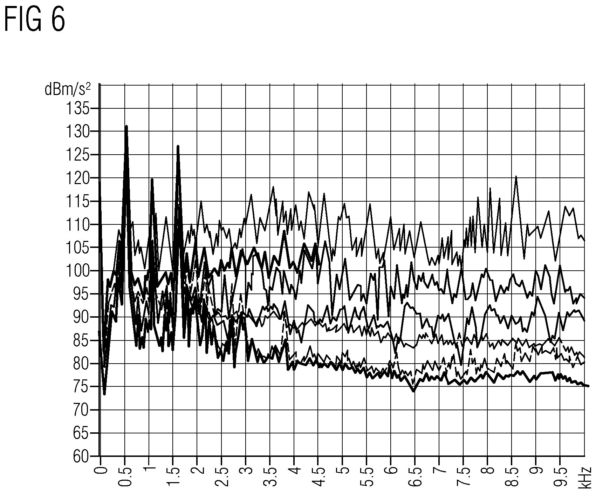

Figure 6 shows an exemplarily frequency spectrum of the first vibrational sensor. Herein, the harmonic units up to approximately 2.5 kHz are stable and dominant. Making use of the vibration data as, for example, shown in figures 3 to 6 it is possible to exactly determine the current state of the treatment of the fiber-based material. However, the vibration data can not only be utilized to identify the current state of the fiber-based material. Additionally, it is possible to identify a specific damage of the treatment device. Like damaged sealings, fastenings, even the state of the wear out of the stirrer can be identified. For example, such damage can be identified based on vibration pattern data being stored on a database, wherein the specific damage is associated to a vibration pattern data being able to be retrieved from said database and compared to the vibration data to correspondingly deduce a related damage.

Overall, it becomes possible to determine the current state of the treatment of the fiber-based material based on the vibrations of the at least one container and to easily acquire, for example, the above referenced characteristics and constantly review the real state of the fiber-based material. Enabling to easily and early counter any malfunction and deviation from the expected behavior as well as speed up the treatment by skipping safety time periods included to ensure, for example, the finalization of a corresponding treatment step before the next step takes place.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of controlling a treatment of a fiber-based material (35),
wherein the method utilizes a control unit adapted to control the treatment of the fiber-based material (35) and a treatment device containing at least one vibration sensor (21) and at least one container (34),
wherein the vibration sensor (21) receives vibration signals from the container (34) during a treatment process of fiber-based material (35) in the at least one container (34) and generates vibration data (37),
wherein the vibration data (22) is analyzed by the control unit (33) to determine a current state of the fiber-based material (35) in the at least one container (34),
wherein the treatment conditions of the fiber-based material (35) in the at least one container (34) are at least partially controlled based on the current state.

2. Method according to any of the aforementioned claims, wherein the vibration data (22) is analyzed by a control unit (33) to determine a current state of the fiber-based material (35) in the at least one container (34) utilizing an artificial intelligence.

3. Method according to any of the aforementioned claims, wherein the vibration data (22) is analyzed by a control unit (33) to determine a current state of the fiber-based material (35) in the at least one container (34) utilizing pattern recognition.

4. Method according to any of the aforementioned claims, wherein the fiber-based material (35) is fiber pulp or paper.

5. Method according to any of the aforementioned claims, wherein the at least one vibration sensor (21) is located at the outer surface or inside a wall of a container (34) of the treatment device, wherein the container (34) of the treatment device is adapted to contain the fiber-based material (35) during a treatment step of the fiber-based material (35), preferably a dissolution step of the fiber-based material.

6. Method according to any of the aforementioned claims, wherein the at least one vibration sensor (21) is located within a container (34) of the treatment device, wherein the container (34) of the treatment device is adapted to contain the fiber-based material (35) during a treatment step of the fiber-based material (35).

7. Method according to any of the aforementioned claims,
wherein vibration pattern data is retrieved from a database,
wherein the vibration pattern data contains at least one vibration pattern relating to a specific damage of the treatment device,
wherein the vibration data (22) is analyzed using the vibration pattern data to identify a damage of the treatment device based on a related vibration pattern.

8. Method according to any of the aforementioned claims, wherein the current state contains data with regard to at least one of the group consisting of movement of a stirring device in the at least one container (34), vibrations of moving parts of the treatment device, vibrations of the at least one container (34), vibrations within the fiber-based material (35), and inhomogeneities within the fiber-based material (35) .

9. Method according to any of the aforementioned claims, wherein at least two vibration sensors (21) collect vibration signals from a single container (34).

10. Method according to any of the aforementioned claims, wherein the at least one vibration sensor (21) contains a vibration sensor (21) detecting vibration signals providing a frequency of from at least 5Hz to at most 20 000Hz.

11. Method according to any of the aforementioned claims, wherein transients of the vibration signal are detected and analyzed.

12. Fiber-based material (35) treatment device being adapted to execute a method according to any of claims 1 to 10,
wherein the fiber-based material (35) treatment device contains at least one vibration sensor (21), at least one container (34), and a control unit (33) adapted to influence the treatment of the fiber-based material (35),
wherein the at least one container (34) is adapted to process the fiber-based material (35).

13. Upgrade kit containing at least one vibration sensor (21) and a control unit (33),
wherein the upgrade kit is adapted to be integrated into a fiber-based material (35) treatment device,
wherein the upgrade kit is adapted to enable the fiber-based material treatment device to execute the inventive method after the kit has been integrated..

14. Computer program product, tangibly embodied in a machine-readable storage medium, including instructions operable to cause a computing entity to execute a method according to any of claims 1 to 4.
